## Europäisches Patentamt
## European Patent Office
## Office européen des brevets

(11) Veröffentlichungsnummer: **0 043 549**
**A1**

(12) **EUROPÄISCHE PATENTANMELDUNG**

(21) Anmeldenummer: **81105088.9**

(22) Anmeldetag: **01.07.81**

(51) Int. Cl.³: **C 12 H 1/04**

(30) Priorität: **03.07.80 DE 3025215**

(43) Veröffentlichungstag der Anmeldung: **13.01.82**
**Patentblatt 82/2**

(84) Benannte Vertragsstaaten: **DE FR IT**

(71) Anmelder: **HOECHST AKTIENGESELLSCHAFT,
Postfach 80 03 20, D-6230 Frankfurt/Main 80 (DE)**

(72) Erfinder: **von Rymon Lipinski, Gert-Wolfhard, Dr.,
Hörselbergstrasse 5, D-6230 Frankfurt am Main 80 (DE)**
Erfinder: **Berger, Harald, Dr.,
Johann-Strauss-Strasse 45, D-6233 Kelkheim Taunus
(DE)**
Erfinder: **Becker, Theo, Dr., Marktplatz 1,
D-6705 Deidesheim (DE)**

(54) **Verfahren zur Beseitigung unerwünschter Geruchs- und Geschmackskomponenten aus Wein.**

(57) Unerwünschte Geruchs- und Geschmackskomponenten werden aus Wein dadurch entfernt, dass man den Wein mit einem feinteiligen Polyolefinpulver, dessen Olefinbausteine zu mindestens etwa 50 Gew.-% Ethyleneinheiten sind und welches gegebenenfalls auf andere übliche Adsorbenzien wie z.B. Aktivkohle, Aluminiumoxide, Silikate usw. aufgezogen sein kann, behandelt.

EP 0 043 549 A1

Verfahren zur Beseitigung unerwünschter Geruchs- und
Geschmackskomponenten aus Wein

_____

Unter den Getränken zeichnet sich Wein durch ein besonders feines und delikates Aroma aus. Zum Geruch und Geschmack des Weines
tragen zahlreiche Verbindungen bei, die zum Teil unmittelbar
aus der Traube stammen, zum Teil während der Gärung von Hefen
gebildet werden und zum Teil auch erst durch Reaktionen während
der Lagerung des Weins entstehen.

Die Vielfalt dieser Verbindungen, die in verschiedenen Weinen in
unterschiedlichen Mengenverhältnissen vorliegen können, ermöglicht die außerordentliche Vielfalt an Weinen verschiedenster
Geruchs- und Geschmackscharakteristik. Da viele der für den angenehmen Geruch und Geschmack des Weins wesentlichen Verbindungen aber nur in Spuren vorliegen, können auch bereits Spuren
von Stoffen mit weniger günstigen sensorischen Eigenschaften
sich sehr negativ auf Geruch und Geschmack des Weins auswirken.

Beispielsweise ist bekannt, daß Stoffwechselprodukte bestimmter
Hefen einen solchen negativen Einfluß besitzen. Ungünstig auf
die geschmacklichen Eigenschaften des Weins kann sich selbst
eine Lagerung zusammen mit geruchsintensiven Produkten auswirken, die in Spuren durch den Korken in den Wein eindiffundieren.

Darüber hinaus ist bekannt, daß selbst bestimmte Arbeiten im
Weinberg, bei denen geruchsintensive Mittel verwendet werden,
sich negativ auf den Wein auswirken können, weil Spuren geruchsintensiver Verbindungen vom Weinstock bzw. den Trauben
absorbiert werden und dadurch in den Wein gelangen. Auch die
in den letzten Jahren bis Jahrzehnten erheblich verbesserten
Verfahren der Weinbereitung und die zunehmende Verlagerung zu
genossenschaftlich organisierten, größeren Erfassungsbetrieben
haben das Problem unerwünschter Geschmackskomponenten im Wein
nicht beseitigen können. Ganz im Gegenteil haben die zunehmende Verbreitung des Weintrinkens und der damit ansteigende
Wissensstand der Weintrinker dazu geführt, daß abweichende Geruchs- und Geschmacksnoten heute leichter wahrgenommen werden als das früher der Fall war.

Dementsprechend wird auch das Problem abweichender Geruchs- und Geschmacksnoten beim Wein in der Fachliteratur in den letzten Jahren verstärkt diskutiert [ Die Weinwirtschaft 114, 352-356, 623-627 (1978), Der Deutsche Weinbau 33, 496-502 sowie 504-514 (1978), Wein-Wissenschaft 33, 170-174 (1978) ]. Weine mit solchen geschmacklichen Fehlern entsprechen nicht den Konsumentenerwartungen. Sie sind deshalb erheblich in ihrem Wert gemindert. Es besteht sogar die Möglichkeit, daß sie bei Qualitätsweinprüfungen abgelehnt werden und allenfalls zu geringem Preis als Tafelwein vermarktet werden können. Für den Weinproduzenten bedeutet also das Auftreten von Geruchs- und Geschmacksfehlern im Wein, daß dieser Wein nur unter erschwerten Bedingungen und unter wirtschaftlichen Einbußen vermarktet werden kann.

Wird Wein mit starken Adsorptionsmitteln behandelt, beispielsweise Aktivkohle, können unerwünschte Aromakomponenten zwar in vielen Fällen aus dem Wein entfernt werden, gleichzeitig werden aber auch viele erwünschte Aromastoffe gebunden, so daß ein geruchlich und geschmacklich flacher und unharmonischer Wein resultiert. Eine solche Behandlung beseitigt dann zwar den Geruchs- und Geschmacksfehler, verbessert aber nicht unbedingt die Aussichten, einen solchen Wein zu vermarkten.

Überraschenderweise wurde nun gefunden, daß ein feinteiliges Polyethylenpulver, allein oder in Kombination mit geeigneten anderen Adsorbenzien, vorzugsweise die für unangenehme Geruchs- und Geschmacksnoten verantwortlichen Komponenten bindet. Besonders überraschend ist, daß die für Geruch und Geschmack des Weins verantwortlichen Aromastoffe so wenig gebunden werden, daß sogar in der Regel das sortenspezifische Bukett erhalten bleibt. Damit führt eine solche Behandlung bei Weinen mit unangenehmen, muffigen Fehltönen zu einer echten sensorischen Verbesserung. Ungünstige geruchliche und geschmackliche Beeinträchtigungen des Weins treten durch diese Behandlung bei Anwendung der zur Entfernung der unerwünschten Komponenten erforderlichen Mengen Polyethylenpulver nicht auf.

Erfindungsgegenstand ist somit ein Verfahren zur Beseitigung unerwünschter Geruchs- und Geschmackskomponenten aus Wein, das dadurch gekennzeichnet ist, daß man den Wein mit einem feinteiligen Polyolefinpulver, dessen Olefinbausteine zu mindestens etwa 50 Gew.%, vorzugsweise zu mindestens etwa 90 Gew.%, Ethyleneinheiten sind, behandelt.

Wenn das Polyolefin nicht ausschließlich aus Ethylen hergestellt ist, kommen für den Rest insbesondere folgende anderen ethylenisch ungesättigten Monomeren in Frage: Olefine, wie Propylen, Isobutylen, Butadien; Vinylester, wie Vinylpropionat, Vinylbutyrat, Vinylbenzoat, vor allem Vinylacetat; Vinylcarbon- säuren wie Acrylsäure, Dimethylacrylsäure, Methacrylsäure, Crotonsäure, Phenylacrylsäure, Itaconsäure; Vinyldicarbonsäuren, wie z.B. Maleinsäure oder deren Anhydrid; Vinylcarbonsäureester wie Dimethyl-, Äthyl-, Propyl-, Butyl-, Octyl-, Decyl-, Dodecylacrylate, -methacrylate und -crotonate, oder Vinylcarbonsäureamide, wie Acrylamid, N-Methylacrylamid, N- Äthylacrylamid, N-Propylacrylamid, N-Isopropylacrylamid, N- Butylacrylamid sowie Methacrylamid und die entsprechend substituierten Methacrylamide oder aromatisch substituierte Äthylene, wie Styrol. Ganz besonders geeignet sind Copolymerisate, die ca. 99,5 - 95 Gew.% Ethylenbausteine und ca. 0,5 - 5 Gew.% Vinylacrylamidgrundbausteine sowie gegebenenfalls weitere Grundbausteine aus einfach ungesättigten copolymerisierbaren Monomeren enthalten. Derartige Produkte sind z.B. aus der DE-OS 1 720 667 und der DE-OS 1 812 143 bekannt.

Daneben können auch Gemische der Polyolefinpulver mit anderen Adsorbenzien eingesetzt werden, bei denen das feinteilige Polyolefin auf diese anderen Adsorbenzien aufgezogen wird. Als zweite Komponente neben dem Polyolefin sind beispielsweise Aktivkohle, Aluminiumoxide und -Hydroxide, Siliziumdioxid und Silikate sowie Bentonite geeignet. Die Herstellung solcher Mischungen ist z.B. aus der DE-OS 2 626 732 bekannt. Die Polyolefine werden mit den genannten Adsorbenzien zweckmäßig im Gew.-Verhältnis ca. 1 : 5 bis ca. 10 : 1, vorzugsweise ca. 1 : 1 bis ca. 5 : 1 gemischt eingesetzt.

Die Teilchengröße der für die erfindungsgemäße Weinbehandlung verwendeten Polyolefinpulver soll möglichst nicht wesentlich über 0,5 mm liegen, und zwar sowohl wenn die reinen Polyolefinpulver als auch wenn die Polyolefine in auf andere übliche Adsorbenzien aufgezogener Form verwendet werden. In letzterem Fall können die aus Polyolefin und anderen Adsorbenzien bestehenden Teilchen auch größer sein (Granulate!) - sie sind hier vorteilhaft zwischen etwa 1 und 5 mm - doch sollen diese kombinierten Teilchen die Polyolefine auch in Teilchengrößen nicht wesentlich über 0,5 mm enthalten. Die Polyolefinpulver werden als solche oder aufgezogen auf die genannten anderen Adsorbenzien in fester Form oder in einem kleinen Volumen Wein suspendiert in den Wein gegeben und unter kräftigem Rühren gleichmäßig verteilt. Die für das Umrühren erforderliche Zeit kann, auch in Abhängigkeit von der Größe des Gebindes, in dem der Wein aufbewahrt wird, ca. 2 Minuten bis zu mehreren Stunden, vorzugsweise aber ca. 5 - 60 Minuten betragen. Die Behandlung kann bei der im Weinkeller üblichen Temperatur bis zu Zimmertemperatur vorgenommen werden. Die für die erfindungsgemäße Behandlung eingesetzten Pulver können nach Beendigung des Rührens oder nach einigem weiteren Stehen in üblicher Weise durch Zentrifugieren oder Filtrieren in Gegenwart inerter Filterhilfsstoffe aus dem Wein entfernt werden. Die Pulver können in Mengen bis zu etwa 300 g/hl Wein eingesetzt werden. Von reinem Polyolefinpulver werden vorzugsweise ca. 5 - 50 g, von den genannten Kombinationen mit anderen Adsorbenzien vorzugsweise ca. 5 - 100 g/hl Wein verwendet.

- 5 -

0043549

Die Erfindung wird anhand der nachstehenden Beispiele näher erläutert:

<u>Beispiel 1</u> :

500 ml eines geruchlich und geschmacklich einwandfreien Weins wurden mit 200 mg eines feuchten Polyethylenpulvers mit einem Trockensubstanzgehalt von etwa 35 % versetzt und 15 Minuten lang gerührt. Anschließend wurde das Polyethylen durch Filtration abgetrennt. Eine Verkostung im Vergleich zu demselben, unbehandelten, aber ebenfalls filtrierten Wein ergab keinen erkennbaren Unterschied zwischen beiden Proben.

Beispiel 2 :

Bei gleicher Arbeitsweise wie in Beispiel 1 wurden 100 mg Polyethylen, das auf 100 mg Aktivkohle aufgezogen war, eingesetzt. Eine Verkostung im Vergleich zum unbehandelten Wein ergab wiederum keinen erkennbaren Unterschied.

Beispiel 3 :

Bei gleicher Arbeitsweise wie in Beispiel 1 wurden 100 mg Polyethylen, das auf 100 mg eines Aluminiumoxidhydrates aufgezogen war, eingesetzt. Eine Verkostung im Vergleich zum unbehandelten Wein ergab wiederum keinen erkennbaren Unterschied.

Beispiel 4 :

500 ml eines Weins mit muffigem Geruch und bitterem Geschmack wurden mit 100 mg eines Präparates versetzt, bei dem 2 (Gew.-) Teile Polyethylen auf 1 (Gew.-)Teil Aktivkohle aufgezogen waren, und 15 Minuten lang gerührt. Anschließend wurde das Gemisch aus Polyethylen und Aktivkohle durch Filtration abgetrennt. Eine Verkostung ergab, daß der Wein nach der Behandlung neutral in Geruch und Geschmack war.

Beispiel 5 :

500 ml eines Weins mit muffigem Geruch und bitterem Geschmack wurden mit 100 mg eines Präparates versetzt, bei dem 1 Teil Polyethylen auf 1 Teil Aluminiumoxidhydrat aufgezogen war, und 15 Minuten lang gerührt. Anschließend wurde das Gemisch aus Polyethylen und Aluminiumoxidhydrat durch Filtration abgetrennt. Eine anschließende Verkostung ergab, daß der Wein neutral in Geruch und Geschmack war.

BAD ORIGINAL

Beispiel 6 :

500 ml eines Weins mit Aldehyd-Geruch und bitterem Geschmack wurden mit 100 mg eines feuchten Polyethylenpräparats mit einem Trockensubstanzgehalt von etwa 35 % versetzt und 15 Minuten lang gerührt. Anschließend wurde das Polyethylen abfiltriert. Eine Verkostung zeigte eine starke Verminderung des Aldehydgeruchs und Bittergeschmacks.

Beispiel 7 :

500 ml eines Weins mit Aldehydgeruch und bitterem Geschmack wurdenmit 100 mg eines Präparates versetzt, bei dem 80 mg Polyethylen auf 20 mg Aktivkohle aufgezogen waren, und 15 Minuten lang gerührt. Anschließend wurde das Gemisch aus Polyethylen und Aktivkohle durch Filtration abgetrennt. Eine Verkostung ergab, daß der Wein im Geruch nahezu und im Geschmack völlig neutral geworden war.

Beispiel 8 :

500 ml eines Weins mit Milchsäurenote in Geruch und Geschmack wurden mit 50 mg eines feuchten Polyethylenpräparates mit einem Trockensubstanzgehalt von etwa 35 % versetzt und 15 Minuten lang gerührt. Anschließend wurde das Polyethylen durch Filtration abgetrennt. Eine Verkostung ergab, daß der Wein neutral in Geruch und Geschmack geworden war.

Beispiel 9 :

500 ml eines Weins mit Milchsäurenote in Geruch und Geschmack wurden mit 100 mg eines Präparates versetzt, bei dem 4 Teile Polyethylen auf 1 Teil Aktivkohle aufgezogen waren, und 15 Minuten lang gerührt. Anschließend wurde das Gemisch aus Polyethylen und Aktivkohle durch Filtration abgetrennt. Eine Verkostung zeigte, daß die Milchsäurenote beseitigt war.

0043549

HOE 80/F 141

PATENTANSPRÜCHE:

1. Verfahren zur Beseitigung unerwünschter Geruchs- und Geschmackskomponenten aus Wein, dadurch gekennzeichnet, daß man den Wein mit einem feinteiligen Polyolefinpulver, dessen Olefinbausteine zumindestens etwa 50 Gew.-%, vorzugsweise zu mindestens etwa 90 Gew.-%, insbesondere zu mindestens etwa 95 Gew.-%, Ethyleneinheiten sind, behandelt.

2. Verfahren nach Anspruch 1, dadurch gekennzeichnet, daß man die Polyolefine in auf andere übliche Adsorbenzien - vorzugsweise auf Aktivkohle, Aluminiumoxide, Aluminiumoxihydrate, Aluminiumhydroxide, Siliciumdioxid, Silikate und/oder Bentonite - aufgezogener Form verwendet.

3. Verfahren nach Anspruch 2, dadurch gekennzeichnet, daß das Gewichtsverhältnis von Polyolefin zu dem jeweiligen anderen üblichen Adsorbenz etwa 1:5 bis etwa 10:1, vorzugsweise etwa 1:1 bis etwa 5:1, beträgt.

4. Verfahren nach den Ansprüchen 1 bis 3, dadurch gekennzeichnet, daß die Teilchengröße des Polyolefin(pulver)s unterhalb von etwa 0,5 mm liegt.

5. Verfahren nach den Ansprüchen 1 bis 4, dadurch gekennzeichnet, daß man das feinteilige Polyolefinpulver als solches oder in auf andere übliche Absorbenzien aufgezogener Form in einer Menge bis zu etwa 300 g/hl, vorzugsweise etwa 5 bis 100 g/hl, insbesondere etwa 5 bis 50 g/hl Wein verwendet.

BAD ORIGINAL

# EUROPÄISCHER RECHERCHENBERICHT

0043549

EP 81 10 5088

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | FR - A - 2 220 292 (CHEVRON RESEARCH CIE.) <br> * Anspruch 1; Seite 3, Zeilen 3-35; Seite 4, Zeilen 2-26; Beispiele 2-6 * <br> & DE - A - 2 409 343 | 1 | C 12 H 1/04 |
| X | GB - A - 1 248 501 (NATIONAL LEAD CIE.) <br> * Ansprüche 1,9; Seite 2, Zeilen 50-53; Seite 1, Zeilen 12-18 * | 1-3,5 | |
| X | LU - A - 81 052 (MONTEDISON SpA) <br> * Ansprüche 1,6-9; Seite 3, Zeilen 8-15; Seite 4, Zeilen 30-35; Seite 6, Zeilen 21-23; Seite 5, Zeilen 29-36 * <br> & DE - A - 3 005 360 | 1-5 | RECHERCHIERTE SACHGEBIETE (Int. Cl.³) <br><br> C 12 H 1/04 |
| | GB - A - 1 170 267 (AB BONNIER-FÖRETAGEN) <br> * Seite 1, Zeile 67 - Seite 2, Zeile 41; Ansprüche 1,2,4 * <br> & DE - A - 1 517 871 | 1 | |
| X | FR - A - 2 019 081 (MONSANTO CIE.) <br> * Ansprüche 1,9; Seite 13, Zeilen 1-16; Seite 8, Zeilen 11-15 * <br> & DE - A - 1 945 749 | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-10-1981 | COUCKE |

EPA form 1503.1   06.78